# EUROPEAN PATENT APPLICATION

(11) **EP 1 770 526 A2**
(43) Date of publication of application: **04.04.2007**
(21) Application number: 06118337.2
(22) Date of filing: 02.08.2006
(51) Int. Cl.: G06F 11/32

(54) **Display apparatus and control method therefor**

(30) Priority: 04.08.2005 KR 20050071217
(71) Applicant: SAMSUNG ELECTRONICS CO., LTD., Suwon-City, Kyungki-do (KR)
(72) Inventor: Kweon, Tae-deok, Seoul (KR)
(74) Representative: Clark, Charles Robert

(57) **Abstract**

A display apparatus and a control method of a display apparatus to which a plurality of electronic devices is connected via a serial bus are provided. The control method includes: updating device information on the plurality of electronic devices if a reset signal is received; detecting an electronic device that generated the reset signal; displaying electronic device items corresponding to the plurality of connected electronic devices based on the updating device information on the plurality of electronic devices; and changing a display state of an electronic device item corresponding to the detected electronic device when the electronic device items are displayed. Thus, the present invention allows a user to efficiently recognize an electronic device generating a bus reset when the electronic device is connected to or disconnected from a network.

## Description

The present invention relates to a display apparatus and a control method for a display apparatus, and more particularly, to a display apparatus and a control method for a display apparatus, which allows a user to recognize an electronic device generating a bus reset, when the electronic device is connected to or disconnected from a network.

In general, IEEE 1394 multimedia transmission standards, which have been established as transmission techniques or standards between digital electronic devices, are interface standards for allowing data to be transmitted/received at a high speed among communication devices, computers and home appliances, all of which are interconnected through a single network. That is, the digital electronic device for IEEE 1394 communication are connected to different electronic devices via an IEEE 1394 serial bus that supports the IEEE 1394 transmission standards, and each electronic device receives data and so on transmitted from another electronic device and transmits the received data to yet another electronic device. Here, the digital electronic devices for IEEE 1394 communication may be digital televisions (TVs), camcorders, set-top boxes, or the like.

A conventional operation of a network utilizing IEEE 1394 transmission standards is now described. First, in an operation of a network where a plurality of electronic devices are interconnected via an IEEE 1394 serial bus are operate, a bus reset signal is generated in the network when a new electronic device is connected to the network or an established electronic device is disconnected from the network. Each of the electronic devices on the IEEE 1394 serial bus updates information on other connected electronic devices based on the bus reset signal. Explaining such a procedure from the point of view of a digital TV, when a new electronic device is connected to the network or an established electronic device is disconnected from the network, device information on other electronic devices connected to the digital TV is updated. Thereafter, the digital TV displays items of the connected electronic devices on a User Interface (UI) screen, based on the update device information, in order to show the items to a user.

However, when a new electronic device is connected to the network or an established electronic device is disconnected from the network, there may exist an erroneous electronic device that has an incompatible product specification or does not satisfy a product specification. The erroneous electronic device continues to generate a bus reset signal to update device information. When the bus reset signal continues to be generated, all electronic devices (including the digital TV) on the bus continue to update the device information of other electronic equipments connected thereto, based on the bus reset signal This may result in instability of the bus. From the point of view of the digital TV, as other electronic devices (a plurality of electronic devices including an erroneous electronic device) connected to the digital TV continue to update the device information of other electronic devices, there may occur abnormality of a UI screen of the digital TV on which electronic device items are displayed. The abnormalities can be manifested as alternation of the UI screen between appearance and disappearance, or alternation of the electronic device items on the UI screen between appearance and disappearance.

Therefore, when a user sees the display abnormality of the UI screen that occurred due to the erroneous electronic device on the network, the user may become confused and mistakenly believe that the digital TV is improperly operating, although it is properly operating. In addition, even if the user knows that the display abnormality of the UI screen is not caused by an erroneous operation of the digital TV, since he does not know which one of the connected devices is an erroneous electronic device that continues to generate the bus reset signal, there is an inconvenience; he must find the erroneous electronic device while randomly removing electronic devices from the network one by one.

Embodiments of the present invention aim to overcome the above disadvantages. In broad terms, the present invention provides a display apparatus and a control method for a display apparatus, which allows a user to efficiently identify and recognize an electronic device generating a bus reset signal when the electronic device is connected to or disconnected from a network.

According to an aspect of the present invention, there is provided a control method of a display apparatus to which a plurality of electronic devices is connected via a serial bus, comprising: determining whether a reset signal generated when an electronic device is connected or disconnected is received; if it is determined that the reset signal is received, updating device information on the plurality of connected electronic devices; detecting the electronic device that generates the reset signal; displaying electronic device items corresponding to the plurality of connected electronic devices based on the updated device information; and when the electronic device items are displayed, changing a display state of an electronic device item corresponding to the detected electronic device such that the display state of the electronic device item corresponding to the detected electronic device is distinguished from a display state of other electronic device items.

The reset signal may be generated if an electronic device is added or removed from the serial bus.

The display state of the electronic device item corresponding to the detected electronic device may be distinguished from a display state of other electronic device items.

The display state of the electronic device item corresponding to the detected electronic device may become equal to the display state of other electronic device items.

The control method may further comprise: determining whether the reset signal is again received in a predetermined display time; and if it is determined that the reset signal is not again received in the predetermined display time, returning the changed display state of the electronic device item corresponding to the detected electronic device to an original display state such that the display state of the electronic device item corresponding to the detected electronic device becomes equal to the display state of other electronic device items.

The updating device information on the plurality of connected electronic devices may comprise: receiving self information provided from the respective electronic devices that receive the reset signal via the serial bus; and updating the device information on the plurality of electronic devices using the received self information.

The detecting the electronic device that generates the reset signal may comprise detecting the electronic device that provides the self information including reset generation information indicating that the reset signal is generated, among the self information based on the self information provided from the plurality of electronic devices.

The serial bus may be an IEEE 1394 serial bus.

The changing a display state of an electronic device item corresponding to the detected electronic device may comprise additionally indicating a predetermined indication mark on the electronic device item corresponding to the detected electronic device.

The changing a display state of an electronic device item corresponding to the detected electronic device may comprise making a display color of the electronic device item corresponding to the detected electronic device different from a display color of other electronic device items.

According to another aspect of the present invention, there is provided a display apparatus to which a plurality of electronic devices is connected via a serial bus comprising a display part, a UI generating part for displaying an electronic device menu including electronic device items corresponding to the plurality of connected electronic devices, and a controlling part for determining whether a reset signal generated when an electronic device is connected or disconnected is received, updating device information on the plurality of connected electronic devices if it is determined that the reset signal is received, detecting an electronic device that generated the reset signal, controlling the UI generating part to display the electronic device menu with a display state of the electronic device items changed such that a display state of an electronic device item, which corresponds to the detected electronic device of the electronic device items corresponding to the plurality of connected electronic devices is distinguished from a display state of other electronic device items.

The controlling part may determine whether the reset signal is again received in a predetermined display time, and, if it is determined that the reset signal is not again received in the predetermined display time, control the UI generating part to display the electronic device menu with the changed display state of the electronic device items returned to an original display state such that the display state of the electronic device item corresponding to the detected electronic device becomes equal to the display state of other electronic device items.

The controlling part may receive self information provided from the plurality of electronic devices that receive the reset signal via the serial bus, and update the device information on the respective electronic devices using the received self information.

The controlling part may detect an electronic device that provides the self information including reset generation information indicating that the reset signal is generated among the self information, based on the self information provided from the plurality of electronic devices.

The serial bus may be an IEEE 1394 serial bus.

Embodiments of the present invention are now described by way of example and with reference to the accompanying drawings, of which:
Figure 1 is a control block diagram of a network including a display apparatus according to an embodiment of the present invention;
Figure 2 is a control flow chart of the display apparatus according to the embodiment of the present invention; and
Figure 3 is an exemplary view showing electronic device items in the display apparatus according to the embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the Figures.

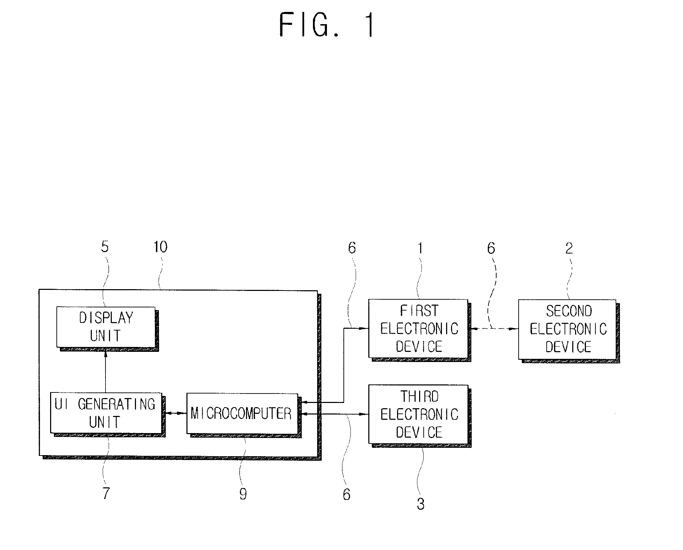

Figure 1 is a control block diagram of a network including a display apparatus 10 according to an embodiment of the present invention. As shown in Figure 1, a network includes a display apparatus 10 and a plurality of electronic devices 1, 2 and 3, which are interconnected via an IEEE 1394 serial bus. Although it is shown in the figure that the network includes three electronic devices, i.e., a first electronic device 1, a second electronic device 2, and a third electronic device 3, which are connected to the display apparatus 10, it is to be understood that the network may include more than three electronic devices or a single electronic device.

The electronic devices 1, 2 and 3 may be any digital device supporting the IEEE 1394 communication standard, such as a camcorder, set-top box, or DVD player.

As shown in Figure 1, under a condition where the electronic devices 1, 3 and 10 interconnected via the IEEE 1394 serial bus 6 are normally operated, the second electronic device 2 is newly connected to the first electronic device 1, and the second electronic device 2 generates a bus reset signal. Then, all of the electronic devices 1, 2, 3 and 10 on the IEEE 1394 serial bus 6 update device information on other electronic devices connected thereto, based on the bus reset signal. For example, from the point of view of the first electronic device 1, upon receiving the bus reset signal from the second electronic device 2, the first electronic device 1 provides its own self information to other electronic devices 2, 3 and 10 connected to the first electronic device 1 such that other electronic devices 2, 3 and 10 may update device information on the first electronic device 1. The first device 1 also receives self information provided by other electronic devices 2, 3 and 10. Then, the first electronic device 1 may update device information on other electronic devices 2, 3 and 10 using the received self information. In addition, under a condition where the electronic devices 1, 2, 3 and 10 interconnected via the IEEE 1394 serial bus 6 are normally operated, when the second electronic device 2 is disconnected from the first electronic device 1, the first electronic device 1 from which the second electronic device 2 is disconnected generates a bus reset signal. Then, similarly, all the electronic devices 1, 3 and 10 on the IEEE 1394 serial bus 6 update device information on other electronic devices connected thereto by transmitting/receiving the self information based on the bus reset signal.

The display apparatus 10, which is a digital device supporting the IEEE 1394 communication includes a display unit 5, a UI generating unit 7, and a microcomputer 9.

The display unit 5 displays a UI menu according to a UI menu signal provided from the UI generating unit 7. In addition, the display unit 5 may also receive an image signal from an image signal processor (not shown) that processes the image signal to be displayed on an image screen, and display the received image signal on the image screen. The display part 5 may include a display panel (not shown) on which an image is displayed, and a panel driving part (not shown) that processes the image signal input from the image signal processor (not shown) and displays the processed image signal on the display panel (not shown).

The UI generating unit 7 generates an electronic device menu signal for displaying electronic device menus including electronic device items corresponding to the electronic devices 1, 2 and 3 connected to the display apparatus 10, under control of the microcomputer 9. It may be preferable but not necessary that the UI generating unit 7 is an On Screen Display (OSD) generating part (not shown) for generating an OSD menu signal.

Preferably, the microcomputer 9 is a bus controller for communication with the plurality of electronic devices 1, 2 and 3 connected thereto via the IEEE 1394 serial bus 6. Under the condition where the plurality of electronic devices connected to the microcomputer 9 via the IEEE 1394 serial bus 6 is normally operated, the microcomputer 9 determines whether a bus reset signal is received. This bus reset signal is generated when a new electronic device is added or an established electronic device is removed. The bus reset signal may also be generated in software by an erroneous electronic device.

Under the condition where the first electronic device 1 and the third electronic device 3 are connected to the microcomputer 9 of the display apparatus 10 via the IEEE 1394 serial bus 6, when the microcomputer 9 receives a bus reset signal generated by the second electronic device 2 newly connected to the first electronic device 1, the display apparatus 10 provides its own self information to other electronic devices 1, 2 and 3 connected to the display apparatus 10 such that other electronic devices 1, 2 and 3 may update device information of the display apparatus 10. In turn, the display apparatus 10 also receives self information provided by other electronic devices 1, 2 and 3.

Then, the microcomputer 9 updates the device information of other respective electronic devices 1, 2 and 3 based on the received self information. Also, similar to the display apparatus 10, other electronic devices 1, 2 and 3 on the IEEE 1394 serial bus 6 update each device information of the electronic devices connected thereto.

In addition, under the condition where the first electronic device 1, the second electronic device 2 and the third electronic device 3 are connected to the microcomputer 9 of the display apparatus 10 via the IEEE 1394 serial bus 6, when the second electronic device 2 is disconnected from the first electronic device 1, the microcomputer 9 receives a bus reset signal generated by the first electronic device 1 from which the second electronic device 2 is disconnected. Then, the microcomputer 9 which has received the bus reset signal provides its own self information to other electronic devices 1 and 3 connected to the display apparatus 10 such that other electronic devices 1 and 3 may update the device information of the display apparatus 10. The display apparatus 10 also receives self information provided by other electronic devices 1 and 3.

Then, the microcomputer 9 updates each device information of other electronic devices 1 and 3 based on the received self information. Also, similar to the display apparatus 10, other electronic devices 1 and 3 on the IEEE 1394 serial bus 6 update each device information of electronic devices connected thereto.

In this manner, when the device information of other electronic devices 1, 2 and 3 connected to the display apparatus 10 is updated based on the bus reset signal generated when a new electronic device is additionally connected or an established electronic device is disconnected, the microcomputer 9 detects the self information including reset generation information indicating that the bus reset signal is generated, in the self information of the electronic devices, which are provided from other electronic devices 1, 2 and 3 connected to the microcomputer 9. Then, the microcomputer 9 may detect a corresponding electronic device (for example, the second electronic device 2) that provides the self information including the reset generation information.

After updating the device information of other electronic devices 1, 2 and 3 connected to the microcomputer 9, the microcomputer 9 controls the UI generating part 7 to generate an electronic device menu signal for distinguishing between a display state of an electronic device item corresponding to the detected second electronic device 2 that generated the bus reset signal and a display state of other electronic device items corresponding to the first and third electronic devices 1 and 3. In this case, a method of distinguishing between a display state of an electronic device item of the detected second electronic device 2 that generates the bus reset signal and a display state of other electronic device items corresponding to the first and third electronic devices 1 and 3 may be provided in various ways. For example, this can be done by changing a display colour of an electronic device item of the detected second electronic device 2 that generated the bus reset signal, or alternatively indicating a predetermined indication mark on the electronic device item.

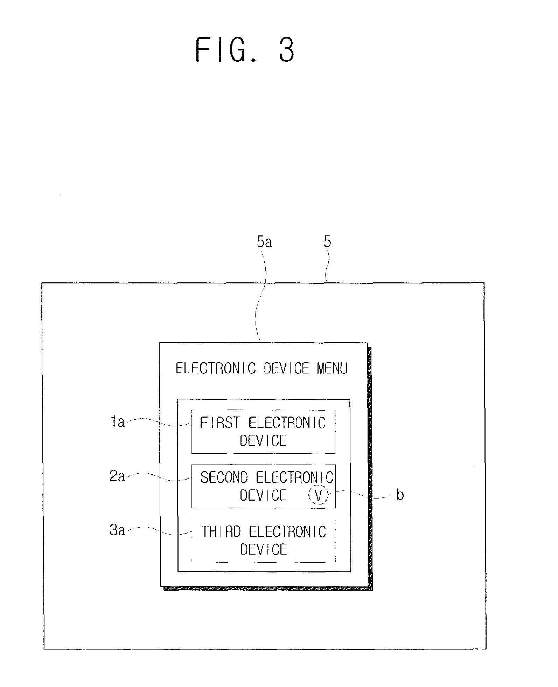

In this example, a method of additionally indicating a predetermined indication mark on the electronic device item will be described. As shown in Figure 3, the microcomputer 9 controls the UI generating part 7 to display an electronic device menu 5a on the display part 5 such that an indication mark b is additionally indicated on an electronic device item or icon 2a of the detected second electronic device 2 that generated the bus reset signal. As such, the indication mark may be used to distinguish the detected second electronic device 2 from other electronic device items or icons 1a and 3a.

After displaying the electronic device menu 5a, the microcomputer 9 determines whether or not the bus reset signal is again received in a predetermined display time. If it is determined that the bus reset signal is not again received in the predetermined display time, the microcomputer 9 controls the UI generating part 7 to return the electronic device item 2a which had been displayed to be distinguishable from other electronic device items 1a and 3a to an original display state. That is, the microcomputer 9 controls the UI generating part 7 to remove the indication mark b of the electronic device item 2a so that the display state of the electronic device item 2a becomes equal to the display state of other electronic device items 1a and 3a.

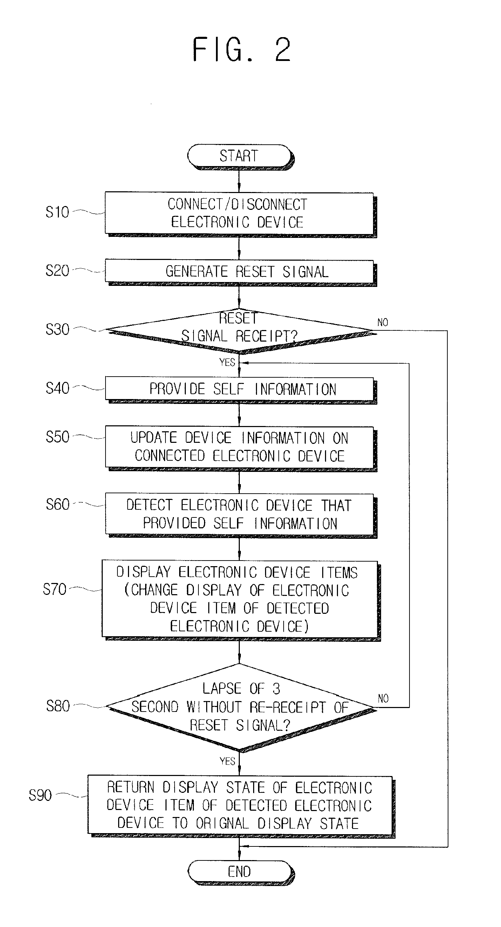

A control method for the display apparatus of the present invention will be described with reference to Figure 2. For the sake of convenience of explanation, a control method of the display apparatus will be described using the construction shown in Figure 1.

First, in a case where the display apparatus 10 and the plurality of electronic devices are interconnected via the IEEE 1394 serial bus 6 and are normally operated, an electronic device is added or an established electronic device is disconnected by a user at operation S10. The second electronic device 2 is additionally connected under the condition where the first electronic device 1 and the display apparatus 10 and the third electronic device 3 are interconnected and are normally operated. When the second electronic device 2 is additionally connected by the user, it generates the bus reset signal at operation S20. Then, the bus reset signal is transmitted to the display apparatus 10 and the electronic devices 1 and 3 via the bus 6. The microcomputer 9 determines whether or not the bus reset signal is received at operation S30, and if it is determined that the bus reset signal is received, provides the self information of the display apparatus 10 to the electronic devices 1, 2 and 3 via the bus 6 at operation S40. Likewise, the electronic devices 1, 2 and 3 also provide their own self information to other electronic devices (including the display apparatus 10) via the bus 6 at operation S40. Then, the microcomputer 9 receives the self information of the electronic devices 1, 2 and 3 and updates the device information on the connected electronic devices 1, 2 and 3 based on the received self information at operation S50. At this time, the microcomputer 9 detects the self information including the reset generation information indicating that the bus reset signal is generated in the received self information of the electronic devices 1, 2 and 3. Then, the microcomputer 9 may detect a corresponding electronic device (for example, the second electronic device 2) that provided the self information including the reset generation information at operation S60.

After completing operations S50 and S60, the microcomputer 9 controls the UI generating part 7 to display electronic device items corresponding to the electronic devices 1, 2 and 3 connected to the display apparatus 10, based on the updated device information. At this time, the microcomputer 9 controls the UI generating part 7 to change a display state of an electronic device item corresponding to the detected second electronic device 2 that generates the bus reset signal in order to distinguish between the display state of the electronic device item of the second electronic device 2 and a display state of other electronic device items corresponding to the first and third electronic devices 1 and 3, as shown in Figure 3 at operation S70.

Accordingly, a user may efficiently recognize and identify an electronic device item which generates a bus reset signal when an electronic device is additionally connected or disconnected by displaying an electronic device menu including electronic device items.

Thereafter, the microcomputer 9 determines whether or not the bus reset signal is again received in a predetermined display time (for example, 3 seconds) at operation S80. If it is determined that the bus reset signal is not again received in 3 seconds, the microcomputer 9 controls the UI generating part 7 to return the changed electronic device item 2a to an original display state at operation S90. Then, the display state of the electronic device item 2a becomes equal to the display state of other electronic device items 1a and 3a. That is, the microcomputer 9 controls the UI generating part 7 to remove the indication mark b of the electronic device item 2a in the state shown in Figure 3 so that the display state of the electronic device item 2a becomes equal to the display state of other electronic device items 1a and 3a.

If it is determined that the bus reset signal is again received in 3 seconds, the microcomputer 9 and other electronic devices repeat operations S40 to S80. More specifically, the microcomputer 9 repeats operations S40 to S80 to again update the device information on the connected electronic devices again, detect an electronic device that generates a bus reset signal in a predetermined display time (for example, 3 seconds), and display the electronic device items in such a manner that the electronic device item of the electronic device that generates the bus reset signal is distinguished from other electronic device items.

Accordingly, when an electronic device is additionally connected or disconnected, a user may efficiently recognize an electronic device which generates a bus reset signal. In addition, if an electronic device operates erroneously by continually generating a bus reset signal, the erroneous electronic device that generated the bus reset signal may be detected and recognized by a user. Thus, the user may know which one of the connected electronic devices is an erroneous electronic device without difficulty and with convenience, and thereby enables the user to remove only the erroneous electronic device from the serial bus 6 to stabilize the bus 6.

As apparent from the description, the present invention provides a control method for a display apparatus, which allows a user to efficiently recognize an electronic device generating a bus reset when the electronic device is connected to or disconnected from a network.

Although a few embodiments of the present invention have been shown and described, it will be appreciated by those ordinarily skilled in the art that changes may be made in these embodiments without departing from the principles of the invention, the scope of which is defined in the appended claims and their equivalents.

## Claims

1. A display apparatus to which a plurality of electronic devices are connected via a bus, the display apparatus comprising:
a user interface (UI) generating unit arranged to generate a UI including an electronic device menu having electronic device items corresponding to the plurality of electronic devices;
a display part which displays the UI; and
a controlling part arranged to
determine whether a reset signal is received,
update device information on the plurality of connected electronic devices if it is determined that the reset signal is received,
detect an electronic device that generated the reset signal, and
control the UI generating part to display an electronic device menu with a display state of the electronic device items changed.

2. The display apparatus according to claim 1, wherein, during use, the reset signal is generated when the electronic device is added or removed from the bus.

3. The display apparatus according to claim 1 or 2, wherein a display state of the electronic device item which corresponds to the detected electronic device is arranged to be distinguishably displayed from a display state of other electronic device items.

4. The display apparatus according to claim 1, 2or 3, wherein the controlling part is arranged to determine whether the reset signal is received again within a display time, and to control the UI generating part to generate the electronic device menu with the changed display state of the electronic device items returned to an original display state when it is determined that no reset signal is received again within the display time.

5. The display apparatus according to any of claims 1 to 4, wherein the display state of the electronic device item corresponding to the detected electronic device is arranged to become equal to the display state of other electronic device items.

6. The display apparatus according to any preceding claim, wherein the controlling part is arranged to receive data provided from the plurality of electronic devices that receive the reset signal via the bus, and to update the device information on the respective electronic devices using the received data.

7. The display apparatus according to any preceding claim, wherein the controlling part is arranged to detect, among the data provided from the plurality of electronic devices, an electronic device that provided data which includes reset generation information indicating that the reset signal is generated.

8. The display apparatus according to any of claims 1 to 7, wherein the bus comprises an IEEE 1394 serial bus.

9. A control method of a display apparatus to which a plurality of electronic devices are connected via a bus, the control method comprising:
updating device information on the plurality of electronic devices when a reset signal is received;
detecting a first electronic device that generated the reset signal;
displaying on the display electronic device items corresponding to the plurality of connected electronic devices, based on the updated device information; and
changing a display state of an electronic device item corresponding to the first electronic device.

10. The control method according to claim 9, wherein the reset signal is generated if an electronic device is added or removed from the bus.

11. The control method according to claim 9, wherein the display state of the electronic device item corresponding to the detected electronic device is distinguishable from a display state of other electronic device items.

12. The control method according to claim 11, further comprising:
determining whether the reset signal is received again within a display time; and
returning the changed display state of the electronic device item corresponding to the first electronic device to an original display state when it is determined that no reset signal is received again within the display time.

13. The control method according to claim 12, wherein the display state of the electronic device item corresponding to the first electronic device becomes equal to the display state of other electronic device items.

14. The control method according to claim 9 or 12, wherein the updating device information on the plurality of connected electronic devices comprises:
receiving data from each of the plurality of electronic devices that received the reset signal, said data comprising information about the device from which it was received; and
updating the device information on the plurality of electronic devices using the received data.

15. The control method according to claim 14, wherein the detecting of the electronic device that generates the reset signal comprises
detecting, among the data provided from the plurality of electronic devices, the electronic device that provides data including reset generation data indicating that the reset signal is generated.

16. The control method according to any of claims 9 to 15, wherein the bus comprises an IEEE 1394 serial bus.

17. The control method according to any of claims 9 to 16, wherein the changing of the display state of the electronic device item corresponding to the first electronic device comprises
providing an indication mark on the electronic device item corresponding to the first electronic device.

18. The control method according to any one of claims 9 to 16, wherein the changing of the display state of the electronic device item corresponding to the first electronic device comprises
displaying the electronic device item corresponding to the first electronic device with a colour which is different to a display colour of other electronic device items.
